# EUROPEAN PATENT APPLICATION

(11) **EP 4 512 525 A1**
(43) Date of publication of application: **26.02.2025**
(21) Application number: 23795511.7
(22) Date of filing: 27.04.2023
(51) Int. Cl.: B01J 38/00, B01J 38/12

(54) **CATALYTIC CRACKING CATALYST REGENERATION METHOD AND SYSTEM USING BIOCHAR FUEL**

(30) Priority: 29.04.2022 CN 202210475999; 29.04.2022 CN 202210474593
(71) Applicant: China Petroleum & Chemical Corporation, Beijing 100728 (CN); Sinopec Research Institute of Petroleum Processing Co., Ltd., Beijing 100083 (CN)
(72) Inventor: YANG, Wenjie, Beijing 100083 (CN); XU, Youhao, Beijing 100083 (CN); SHU, Xingtian, Beijing 100083 (CN); BAI, Xuhui, Beijing 100083 (CN); WANG, Xin, Beijing 100083 (CN)
(74) Representative: karo IP
(86) International application number: PCT/CN2023/091013
(87) International publication number: WO 2023/208079

(57) **Abstract**

Disclosed is a catalyst regeneration method suitable for a fluidized catalytic cracking unit comprising a catalytic cracking reactor and a catalyst regenerator, wherein the regeneration method comprises the following steps: 1) providing a biomass-derived biomass charcoal; 2) feeding the biomass charcoal and the catalyst to be regenerated from the catalytic cracking reactor into the catalyst regenerator together or separately; 3) introducing an oxygen-containing gas into the catalyst regenerator, wherein the oxygen content of the oxygen-containing gas is 14-28% by volume; and 4) contacting the catalyst to be regenerated with the biomass charcoal and oxygen-containing gas in the catalyst regenerator for coke-burning regeneration. The method provided by the present application fundamentally changes the energy source of the unit, can significantly reduce carbon emissions from the catalytic cracking unit, realize the recycling of carbon elements, and provide energy for other process units.

## Description

### Technical Field

The present application relates to the regeneration of a coke-containing catalytic cracking catalyst, and in particular to a method and system for regenerating a catalytic cracking catalyst using a biomass charcoal fuel.

### Background Art

Nowadays, the development of the global refining industry faces many challenges such as new energy substitution and stricter requirements for energy conservation and emission reduction. Flexibly adjusting cracking production plans, reducing carbon dioxide emissions, and mitigating climate change have become the only way for the refining industry to transform its economic growth model and maintain sustainable development. It is urgent to achieve carbon peak in 2030 and carbon neutrality in 2060. The "14th Five-Year Plan" had formulated a carbon peak action plan, which clearly requires accelerating the promotion of green development. China's national carbon emission rights trading market has also been officially launched in 2021. Therefore, it is particularly important to effectively reduce carbon emissions in the process of petroleum refining and chemical production. The research on low-carbon catalytic cracking schemes to reduce oil and increase chemical production is an important task for refineries in the future. Carbon emissions in the heavy oil processing process are mainly flue gas emissions from catalytic cracking coke-burning, hydrogen production process, boilers and other equipment, and energy consumption in the processes. Among them, the catalytic cracking unit is the core equipment in the refinery. The carbon emissions caused by the coke-burning of the catalytic cracking regenerator account for 24-55% of the carbon emissions of the whole plant and nearly 1% of the total carbon dioxide emissions in the whole country. It is the focus of carbon emission reduction in the petrochemical industry.

CN 113 877 397 A discloses an incomplete regeneration process for reducing carbon dioxide emissions. The process uses pure oxygen to incompletely regenerate the catalyst. In the obtained flue gas, the carbon monoxide is used as a chemical raw material, and the carbon dioxide is used for storage or oil recovery, thereby reducing carbon emissions. However, the process mainly involves the post-treatment process of flue gas, which is costly. It involves the separation of carbon monoxide, carbon dioxide, oxygen and other wastes, and the separation process is complicated. Incomplete regeneration does not maximize the use of the chemical energy of coke, and the storage of enriched carbon dioxide causes a waste of resources.

U2)011/0 155 642 A1 discloses a catalytic cracking process for reducing carbon dioxide emissions, which uses a regeneration technology with coke-burning pipe and dense bed connected in series, pure oxygen and multi-point supplemental oxygen. It emphasizes adding a tank in the regeneration route and degassing the regenerated catalyst with nitrogen, and adding a tank in the to-be-regenerated route to mix the regenerated catalyst and the to-be-regenerated catalyst to increase the temperature before regeneration. The coke-burning efficiency of this process is improved, but the advantage of pure oxygen regeneration is lost, and carbon dioxide recovery is difficult. The effect on reducing carbon dioxide emissions is insignificant, and the cost is relatively high.

US 4 542 114 A proposes a method of regenerating operation using oxygen and carbon dioxide, which recycles carbon dioxide and captures and recovers it. However, the process is relatively complicated, and the separation of carbon dioxide uses distillation separation, causing a high energy consumption, and does not recover the pressure energy of the regeneration flue gas, resulting in energy loss, which is not in line with the concept of low-carbon and environmental protection.

The energy of the catalytic cracking unit comes from the coke-burning of the catalyst. When more low-carbon olefins and other chemicals are produced, more reaction heat is required due to the high gas yield. When the amount of coke burned is not enough to meet the energy consumption of the unit, the amount of coke generated is usually increased by recycling oil slurry, increasing the proportion of heavy oil in the feedstock oil, or the regeneration temperature is increased by injecting fuel oil. All three methods can meet the heat balance of the reaction, but all will have a certain impact on the operation of the unit. And the supplementary energy comes from fossil energy sources, which increases the carbon dioxide emissions from fossil energy sources and is not conducive to improving the utilization rate of petroleum resources. Optimizing the regeneration process can improve energy utilization efficiency, thereby reducing unit carbon dioxide emissions to a certain extent; recycling and recovering the emitted carbon dioxide can also reduce carbon dioxide emissions to a certain extent, but the cost is high and the process is relatively complicated. However, the above ideas do not fundamentally change the source of energy, and carbon dioxide still comes from fossil energy sources.

Therefore, it is necessary to develop a catalyst regeneration method that can fundamentally reduce carbon dioxide emissions from fossil energy sources, reduce carbon dioxide emissions while meeting the energy supply required by the unit, and achieve low-carbon development.

### Content of the invention

It is an object of the present application to provide a catalyst regeneration method and system suitable for a fluidized catalytic cracking unit, wherein the method and system introduce solid biomass charcoal fuel derived from biomass into the catalyst regeneration system for combustion to provide energy, maintaining the thermal balance of the fluidized catalytic cracking unit, and thereby fundamentally reducing carbon dioxide emissions from fossil energy sources.

In order to achieve the above object, on the one hand, the present application provides a catalyst regeneration method suitable for a fluidized catalytic cracking unit comprising a catalytic cracking reactor and a catalyst regenerator, and the regeneration method comprises the following steps:
1) providing a biomass-derived biomass charcoal;
2) feeding the biomass charcoal and the catalyst to be regenerated from the catalytic cracking reactor into the catalyst regenerator together or separately;
3) introducing an oxygen-containing gas into the catalyst regenerator, wherein the oxygen content of the oxygen-containing gas is 14-28% by volume, preferably, the oxygen-containing gas is selected from air and oxygen diluted with recycled flue gas; and
4) contacting the catalyst to be regenerated with the biomass charcoal and oxygen-containing gas in the catalyst regenerator for coke-burning regeneration.

Preferably, in step 1), pyrolytic carbon black obtained from other sources, such as pyrolytic treatment of waste tires, is further provided, and in step 2), the pyrolytic carbon black and the biomass charcoal are fed into a catalyst regenerator together or separately.

On the other hand, the present application provides a catalyst regeneration system suitable for a fluidized catalytic cracking unit, comprising a biomass processing unit and a catalyst regeneration unit, wherein:
the biomass processing unit is used to process the biomass to obtain biomass charcoal, and comprises a biomass charcoal generator, a grinder and a storage tank that are connected in sequence, wherein the biomass charcoal generator comprises a biomass feedstock inlet and a product outlet, the product outlet is connected to the inlet of the grinder, and the outlet of the grinder is connected to the inlet of the storage tank;
the catalyst regeneration unit is used to regenerate the catalyst to be regenerated from the catalytic cracking reactor, and comprises a catalyst regenerator having at least one solid material inlet, an oxygen-containing gas inlet, a regeneration flue gas outlet and a regenerated catalyst outlet, and
the outlet of the storage tank is connected to the solid material inlet of the catalyst regenerator.

Preferably, the biomass charcoal is introduced into the catalytic cracking reactor and then fed into the catalyst regenerator together with the catalyst to be regenerated.

Comparing with the existing catalytic cracking catalyst regeneration method and system, the catalyst regeneration method and system of the present application have the following advantages:
(1) Biomass is cheap and readily available. Biomass energy is a renewable energy source, wherein the carbon thereof comes from the carbon dioxide captured by plants from the atmosphere, which is a zero-carbon energy source. Comparing with other treatment methods such as landfill, the resource utilization of waste tires will produce less carbon dioxide, and the carbon dioxide production process is controllable, which is an important part of the circular economy. Using the above resources as an energy source can fundamentally change the source of energy supply for catalytic cracking unit, reduce carbon dioxide emissions from fossil energy, and achieve low-carbon development of refining.
(2) The preparation process of biomass charcoal is simple, and the energy consumed can come from renewable energy sources such as solar energy, green electricity, etc., thus reducing carbon dioxide emissions throughout the life cycle of catalytic cracking;
(3) Biomass charcoal has a high combustion calorific value and is a solid fuel. It can be coupled with the catalytic cracking catalyst regeneration process, and the method of incorporating into the regeneration system is simple and easy to implement;
(4) In a preferred embodiment, by first introducing biomass charcoal into the catalytic cracking reactor, the heavy components in the reaction feedstock that are difficult to convert can be adsorbed and carried to the catalyst regenerator, thereby improving the reactivity of the feedstock, and this part of the heavy components can be used to enhance energy supply;
(5) The carbon dioxide in the regeneration flue gas can be separated and captured, which is conducive to achieving negative carbon emissions; and
(6) The excess heat generated by the regeneration system can be used to supply other devices.

Other features and advantages of the present application will be described in details in the subsequent specific embodiments section.

### Brief description of the figures

The accompanying figures are used to provide a further understanding of the present application and constitute a part of the specification. Together with the following specific embodiments, they are used to explain the present application but do not constitute a limitation to the present application. In the accompanying figures:
FIG. 1 is a schematic diagram of a preferred embodiment of the catalyst regeneration method and system of the present application;
FIG. 2 is a schematic diagram of another preferred embodiment of the catalyst regeneration method and system of the present application;
FIG. 3 is a schematic diagram of yet another preferred embodiment of the catalyst regeneration method and system of the present application;
FIG. 4 is a schematic diagram of a further preferred embodiment of the catalyst regeneration method and system of the present application.

### Specific embodiments

The specific embodiments of the present application are described in details below in conjunction with the accompanying figures. It should be understood that the specific embodiments described here are only used to illustrate and explain the present application, and are not used to limit the present application.

As used herein, the expression "exemplary" means "serving as an example, embodiment, or illustration." Any embodiment described herein as "exemplary" is not necessarily to be construed as superior or better than other embodiments. Although various aspects of the embodiments are shown in the figures, the figures are not necessarily drawn to scale unless otherwise noted.

Any specific numerical value disclosed herein (including the endpoint of the numerical range) is not limited to the exact value of the numerical value, but should be understood to also cover values close to the exact value, such as all possible values within the range of ± 5% of the exact value. In addition, for the disclosed numerical range, one or more new numerical ranges may be obtained by any combination between the endpoint values of the range, between the endpoint values and the specific point values of the range, as well as between the specific point values, and these new numerical ranges should also be regarded as specifically disclosed herein.

In the present application, the so-called "upstream" and "downstream" are based on the flow direction of the reactants. For example, when the reactants flow from bottom to top, "upstream" means the position below, while "downstream" means the position above.

In the present application, it should be noted that the terms "upper", "lower", "inside", "outside", "front", "back", "left", "right", etc., indicate directions or positional relationships, which are based on the directions or positional relationships in the working state of the present application. They are only for the convenience of describing the present application and simplifying the description, and do not indicate or imply that the device or element referred to must have a specific direction, be constructed and operated in a specific direction. Therefore, they should not be understood as limitations on the present application.

In the present application, it should be noted that, unless otherwise clearly specified and limited, the terms "install", "connected", "connecting" and "communication" should be understood in a broad sense. For those of ordinary skills in the art, the specific meanings of the above terms in this application can be understood according to specific circumstances. For example, in this application, the term "connected" includes both the situation where two things are directly connected and the situation where two things are connected via one or more intermediate devices. In particular, in the present application, the so-called "the outlet of the storage tank is connected to the solid material inlet of the catalyst regenerator" may be that the outlet of the storage tank is directly connected to the solid material inlet of the catalyst regenerator, or the outlet of the storage tank is directly connected to the solid material inlet of the catalyst regenerator via other devices, for example, via a catalytic cracking reactor and/or a mixing tank, and a to-be-regenerated inclined pipe.

Unless otherwise specified, the terms used herein have the same meaning as commonly understood by those skilled in the art. If a term is defined herein and its definition is different from the commonly understood meaning in the art, the definition herein shall prevail.

In this application, except for the contents explicitly described, any matters or items not mentioned are directly applicable to those known in the art without any changes. Moreover, any embodiment described herein can be freely combined with one or more other embodiments described herein, and the technical solutions or technical ideas formed thereby are regarded as part of the original disclosure or original record of the present invention, and should not be regarded as new contents not disclosed or anticipated herein, unless those skilled in the art consider that the combination is obviously unreasonable.

All patents and non-patent literatures, including but not limited to textbooks and journal articles, mentioned herein are incorporated herein by reference in their entirety.

In addition, the technical features involved in different embodiments of the present application described below can be combined with each other as long as they do not conflict with each other.

As described above, in a first aspect, the present application provides a catalyst regeneration method suitable for a fluidized catalytic cracking unit comprising a catalytic cracking reactor and a catalyst regenerator, wherein the regeneration method comprises the following steps:
1) providing a biomass-derived biomass charcoal;
2) feeding the biomass charcoal and the catalyst to be regenerated from the catalytic cracking reactor into the catalyst regenerator together or separately;
3) introducing an oxygen-containing gas into the catalyst regenerator, wherein the oxygen content of the oxygen-containing gas is 14-28% by volume; and
4) contacting the catalyst to be regenerated with the biomass charcoal and oxygen-containing gas in the catalyst regenerator for coke-burning regeneration.

The utilization of biomass is essentially an indirect solar energy utilization process. The carbon in the biomass comes from the carbon dioxide captured by plants from the atmosphere, rather than from fossil energy, and the energy consumed in the whole process also comes from solar energy. Therefore, the utilization of biomass energy is also a recycling of carbon elements, and is a carbon-neutral emission process. The rational use of waste tires can also reduce pollution and reduce carbon dioxide emissions, and is an important part of the circular economy. The method of the present application introduces biomass charcoal into the power center of the catalytic cracking unit to supply energy for the operation of the unit. The emitted carbon dioxide does not come from fossil energy, which can fundamentally change the energy source and achieve carbon emission reduction.

According to the present application, in a preferred embodiment, the biomass includes but is not limited to agricultural and forestry biomass, forestry biomass, aquatic plants, energy and cash crops, etc. The agricultural and forestry biomass includes but is not limited to straw, husk, cotton stalks, etc., the forestry biomass includes but is not limited to firewood, fast-growing forests, forestry processing residues, etc., the aquatic plants include but are not limited to reeds, algae, etc., the energy and cash crops include cassava, rape, etc.

In a preferred embodiment, the operating temperature of the catalyst regenerator is in the range of 550-750 °C, and the average catalyst residence time is 1.0-15.0 minutes.

In preferred embodiments, the particle size of the biomass charcoal is 30-1000 microns, and the weight ratio of the catalyst to be generated to the biomass charcoal is 30-300:1. In such preferred embodiments, the biomass charcoal particles can be well mixed with the catalyst to be regenerated, and the mixing is more uniform, which is conducive to heat conduction and more complete combustion. While supplying more energy, it also prevents incompletely burned particles or ash from entering the reactor with the regenerated catalyst.

In a preferred embodiment, in step 2), the biomass charcoal is pre-mixed with the catalyst to be regenerated from the catalytic cracking reactor and then fed together to the catalyst regenerator. Further preferably, the mixing is carried out in a mixing tank, and the mixing tank is provided on a to-be-regenerated inclined pipe for transporting the catalyst to be regenerated from the catalytic cracking reactor to the catalyst regenerator.

In a preferred embodiment, in step 2), the biomass charcoal is introduced into the catalytic cracking reactor and then fed to the catalyst regenerator together with the catalyst to be regenerated. In this preferred embodiment, the biomass charcoal introduced into the catalytic cracking reactor can adsorb the heavy components in the reaction feedstock that are difficult to react and carry them to the catalyst regenerator, thereby improving the reactivity of the feedstock, and the heavy components can be used to enhance energy supply.

In a preferred embodiment, the oxygen-containing gas in step 3) is selected from air and oxygen diluted with recycled flue gas.

In certain preferred embodiments, the catalyst regenerator is a single-stage regenerator, and the operating conditions of the single-stage regenerator include: an operating temperature of 600-750 °C, an average catalyst residence time of 2.0-15.0 minutes, and a gas superficial linear velocity of 0.7-2.0 m/s.

In other preferred embodiments, the catalyst regenerator is a two-stage regenerator comprising a coke-burning section and a regeneration section that are in fluid communication, and in step 2), the biomass charcoal and the catalyst to be regenerated are fed into the coke-burning section together or separately, and in step 3), the oxygen-containing gas is introduced into the bottom of the coke-burning section and the regeneration section respectively.

In a further preferred embodiment, the operating conditions of the coke-burning section include: an operating temperature of 580-720 °C, an average catalyst residence time of 1.0-60.0 seconds, preferably 5.0-50.0 seconds, and a gas superficial linear velocity of 0.5-5.0 m/s, preferably 1.0-3.0 m/s; and the operating conditions of the regeneration section include: an operating temperature of 580-750 °C, an average catalyst residence time of 1.0-7.0 minutes, preferably 1.0-5.0 minutes, and a gas superficial linear velocity of 0.4-1.0 m/s, preferably 0.5-0.8 m/s.

In a further preferred embodiment, the coke-burning ratio in the coke-burning section is 30-60%, and the coke-burning ratio in the regeneration section is 40-70%.

In certain preferred embodiments, in step 1), pyrolytic carbon black obtained from other sources, such as pyrolytic treatment of waste tires, is further provided, and in step 2), the pyrolytic carbon black and the biomass charcoal are fed into a catalyst regenerator together or separately.

In certain preferred embodiments, the step 1) further comprises pyrolyzing the biomass and optionally waste tires under the following conditions to obtain the biomass charcoal and optionally pyrolytic carbon black: a pyrolysis temperature of 400-1000 °C, a heating rate of 0.01-200 °C/s, a pyrolysis environment including vacuum, nitrogen atmosphere, carbon dioxide atmosphere and an inert gas diluted oxygen atmosphere. In such embodiments, the pyrolysis process can be co-pyrolysis of biomass and waste tires, or separate pyrolysis, to obtain biomass charcoal and pyrolytic carbon black respectively.

According to the present application, the energy consumed in the preparation process of biomass charcoal and pyrolytic carbon black can be at least partially or entirely obtained from renewable energy sources such as solar energy, green electricity, nuclear energy, etc.

In a further preferred embodiment, the biomass and optionally the waste tires are pretreated before the pyrolysis treatment, wherein the pretreatment is selected from one or more of grinding, water washing, acid washing and drying to remove impurities such as metal elements, etc., in the biomass and waste tires.

In certain preferred embodiments, the temperature of the regenerator bed is controlled to be no more than 750 °C, preferably no more than 720 °C, by a heat extraction system including one or more in-series-connected internal heat extractors or/and external heat extractors. In this embodiment, the heat extracted from the regenerator by the heat extraction system can be used to generate high-pressure steam to supply energy to outside.

In a second aspect, the present application provides a catalyst regeneration system suitable for a fluidized catalytic cracking unit, comprising a biomass processing unit and a catalyst regeneration unit, wherein:
the biomass processing unit is used to process the biomass and optionally the waste tires, such as pyrolysis treatment to obtain biomass charcoal and optional pyrolytic carbon black, and comprises a biomass charcoal generator, a grinder and a storage tank that are connected in sequence, wherein the biomass charcoal generator comprises a biomass feedstock inlet and a product outlet, the product outlet is connected to the inlet of the grinder, and the outlet of the grinder is connected to the inlet of the storage tank;
the catalyst regeneration unit is used to regenerate the catalyst to be regenerated from the catalytic cracking reactor, and comprises a catalyst regenerator having at least one solid material inlet, an oxygen-containing gas inlet, a regeneration flue gas outlet and a regenerated catalyst outlet, and
the outlet of the storage tank is connected to the solid material inlet of the catalyst regenerator.

In certain preferred embodiments, the biomass processing unit further comprises a preprocessor, wherein the preprocessor is used to pretreat the biomass and optionally the waste tires, and the pretreatment is selected from one or more of grinding, water washing, acid washing and drying.

In a preferred embodiment, the catalyst regeneration system of the present application further comprises a to-be-regenerated inclined pipe connecting the catalytic cracking reactor with the solid material inlet of the catalyst regenerator, wherein:
the outlet of the storage tank is connected to the catalytic cracking reactor, so that the solid particles from the storage tank enter the catalytic cracking reactor, and then are transported to the solid material inlet of the catalyst regenerator through the to-be-regenerated inclined pipe together with the catalyst to be regenerated; or
a mixing tank is provided on the to-be-regenerated inclined pipe, and the outlet of the storage tank is connected to the mixing tank, so that the solid particles from the storage tank are mixed with the catalyst to be regenerated in the mixing tank and then transported to the solid material inlet of the catalyst regenerator through the to-be-regenerated inclined pipe.
In certain preferred embodiments, the catalyst regenerator comprises a coke-burning section and a regeneration section, wherein the outlet of the coke-burning section is in fluid communication with the regeneration section, so that the material in the coke-burning section can be transported to the regeneration section,
wherein the coke-burning section is provided with:
   at least one solid material inlet, which is provided at the lower part of the coke-burning section and is used to transport the biomass charcoal and optionally the pyrolytic carbon black as well as the catalyst to be regenerated from the catalytic cracking reactor into the interior of the coke-burning section; and
   a first oxygen-containing gas inlet, which is provided at the bottom of the coke-burning section and is used to transport the oxygen-containing gas into the interior of the coke-burning section;
   wherein the regeneration section is provided with:
      a second oxygen-containing gas inlet, which is provided at the bottom of the regeneration section and is used to transport the oxygen-containing gas into the interior of the regeneration section;
      the regenerated catalyst outlet, which is used to transport the regenerated catalyst in the regenerator out of the regenerator;
      the regeneration flue gas outlet, which is provided at the top of the regeneration section and is used to discharge the regeneration flue gas in the regeneration section; and
      optionally a recycled flue gas inlet for recirculating a portion of the flue gas discharged from the regeneration section back to the regeneration section.

In certain preferred embodiments, the catalyst regenerator (such as the regeneration section of the regenerator) is further provided with a heat extraction system including one or more in-series-connected internal heat extractors and/or external heat extractors, which is used to control the temperature of the regenerator bed to not exceed 750 °C, preferably not exceed 720 °C. The heat extraction system can also use the heat extracted from the regenerator to generate high-pressure steam to supply energy to outside.

The preferred embodiments of the regeneration method and system of the present application will be further described in details below in conjunction with the accompanying figures.

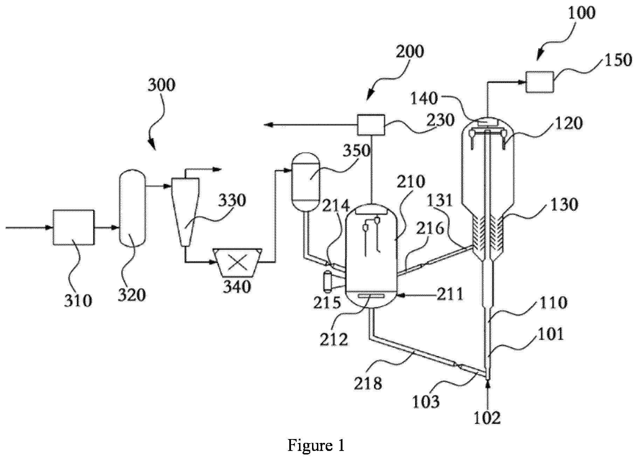

As shown in FIG. 1, FIG. 2, FIG. 3 and FIG. 4, the catalyst regeneration system of the present application is suitable for regenerating the catalyst to be regenerated from the catalytic cracking reaction unit 100, and includes: a biomass processing unit 300, and catalyst regeneration units 200, 400, 500 and 600.

As shown in figures 1, 2, 3 and 4, in the catalytic cracking reaction unit 100, the catalytic cracking reactor 110 is used to perform a catalytic cracking reaction: the bottom inlet 102 thereof is fed with a lifting medium to lift the regenerated catalyst (from the regenerator) entering through the regenerated catalyst inlet 103; the feedstock oil entering from the feedstock oil inlet 101 contacts the catalyst to perform a catalytic cracking reaction. The oil and gas products of the reaction are separated by the oil catalyst separation device 120, and the separated oil and gas products are gathered by a gas collecting chamber 140 and then fed into a product separation device 150 for separation to obtain various products. The separated catalyst to be regenerated is transported to a regeneration unit through the stripping section 130 of the settler, a catalyst to be regenerated outlet 131 and the to-be-regenerated inclined pipe for regeneration, thereby realizing recycling. The catalytic cracking reactor 110 used in the present application can be various reactors commonly used in the art, such as a riser reactor, a fluidized bed reactor, a variable diameter reactor and a combination thereof.

As shown in the figure, the biomass processing unit 300 for processing biomass and optionally waste tires, in particular pyrolysis processing, comprises:
a preprocessor 310 for pretreating the biomass and optionally the waste tires;
a biomass charcoal generator 320, which is used to process the pretreated biomass and optional waste tires, especially to pyrolyze them to obtain biomass charcoal and optional pyrolytic carbon black;
a product separator 330 for separating the products from the biomass charcoal generator 320 to obtain biomass charcoal and optional pyrolytic carbon black;
a grinder 340, which is used to grind the biomass charcoal and the optional pyrolytic carbon black to obtain particles of the biomass charcoal and the optional pyrolytic carbon black with a certain particle size distribution;
a storage tank 350, which is used to store particles of the biomass charcoal and the optional pyrolytic carbon black.

In the preprocessor 310, the pretreatment process of the biomass and the optional waste tires can be selected from one or more of grinding, crushing, melting, water washing, acid washing, drying, etc. to remove metal elements in the biomass and the optional waste tires to avoid poisoning the catalyst.

In preferred embodiments, biomass and optional waste tires are pyrolyzed in the biomass charcoal generator 320, and the operating conditions include: a temperature of 400-1000 °C, a heating rate of 0.01-200 °C/s, and a pyrolysis environment including vacuum, nitrogen atmosphere, carbon dioxide atmosphere and an inert gas diluted oxygen atmosphere.

In such preferred embodiments, in addition to biomass charcoal and optional pyrolysis carbon black, the pyrolysis process produces other pyrolysis products. The pyrolysis products can be separated in the product separator 330, and the obtained biomass charcoal and optional pyrolysis carbon black are transported to the grinder 340, and the remaining pyrolysis products are drawn out or sent to other devices for processing.

According to the present application, in a specific embodiment, the obtained biomass charcoal and optional pyrolytic carbon black can be ground in the grinder 340 so that the particle size of the biomass charcoal and optional pyrolytic carbon black is distributed between 30 and 1000 microns. Subsequently, the granular biomass charcoal and optional pyrolytic carbon black are introduced into a regenerator for regeneration together with the catalyst to be regenerated.

To facilitate the transport of the granular biomass charcoal and optional pyrolytic carbon black, the granular biomass charcoal and optional pyrolytic carbon black may be stored in the storage tank 350.

FIG. 1 shows a schematic diagram of a first preferred embodiment of the catalyst regeneration method and system of the present application, wherein the regeneration process is a single-stage regeneration.

As shown in FIG. 1, the catalyst regeneration unit 200 includes a regenerator 210, wherein the regenerator 210 is provided with:
a catalyst to be regenerated inlet 216, which is used to transport the catalyst to be regenerated from the catalytic cracking reactor to the interior of the regenerator,
an oxygen-containing gas inlet 211, which is used to transport the oxygen-containing gas into the interior of the regenerator,
a regenerated catalyst outlet 218, which is used to transport the regenerated catalyst in the regenerator out of the regenerator.

The regeneration unit 200 is further provided with a heat extractor 215 for transferring heat to the outside of the regenerator.

The storage tank 350 is in fluid communication with the regenerator 210, so that the biomass charcoal and optional pyrolytic carbon black particles in the storage tank are transported to the regenerator 210.

During the regeneration operation, the biomass charcoal and optional pyrolytic carbon black in the storage tank 350 are directly introduced into the regenerator 210 through the inlet 214, and contacted with the catalyst to be regenerated in the regenerator 210 and the oxygen-containing gas entering through the oxygen-containing gas inlet 211 for regeneration. After being separated by a cyclone separator 220, the regenerated catalyst falls back into the regenerator, is discharged through the catalyst outlet 218, and is circulated back to the catalytic cracking reactor. The discharged flue gas is recovered for energy through a flue gas energy recovery system 230.

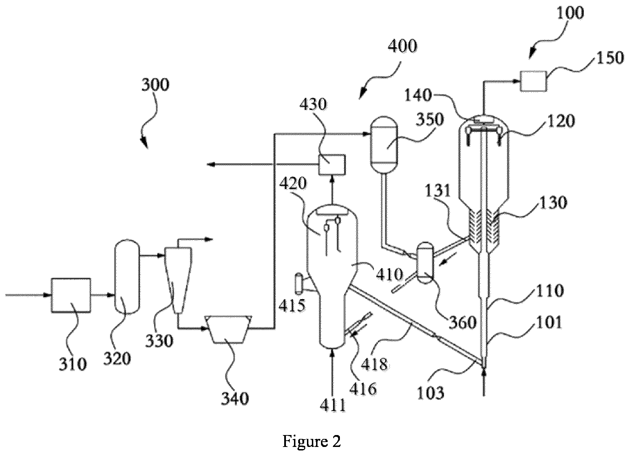

FIG. 2 shows a schematic diagram of a second preferred embodiment of the catalyst regeneration method and system of the present application, wherein the regeneration process is a single-stage regeneration.

As shown in FIG. 2, a mixing tank 360 is provided in the to-be-regenerated inclined pipe, and the storage tank 350 is connected to the mixing tank 360, so that the biomass charcoal and optional pyrolytic carbon black particles in the storage tank 350 are transported to the mixing tank to be pre-mixed with the catalyst to be generated, and then transported to the regenerator 410.

During the regeneration operation, the biomass charcoal and optional pyrolytic carbon black in the storage tank 350 are transported to the mixing tank 360 to be mixed with the catalyst to be regenerated, and then introduced into the regenerator 410 to contact the catalyst to be regenerated with the oxygen-containing gas entering through the oxygen-containing gas inlet 411 for regeneration. After being separated by a cyclone separator 420, the regenerated catalyst falls back into the regenerator, is discharged through the catalyst outlet 418, and is circulated back to the catalytic cracking reactor. The discharged flue gas is recovered for energy through a flue gas energy recovery system 430.

In an embodiment, the ratio of the catalyst to be regenerated to the introduced biomass charcoal and optional pyrolytic carbon black is 30-300:1 (by weight), the operating temperature of the regenerator is 600-750 °C, the average catalyst residence time is 2.0-15.0 minutes, and the gas superficial linear velocity is 0.7-2.0 m/s.

Due to the injection of biomass charcoal and optional pyrolytic carbon black, a large amount of heat will be generated during the regeneration process. If the temperature in the regenerator is too high, it will adversely affect the activity of the catalyst. Therefore, the regeneration units 200 and 400 are also equipped with heat extractors 215 and 415 for removing excess heat from the regenerator. The heat extractor can be an internal heat extractor (arranged inside the regenerator) or/and an external heat extractor (arranged outside the regenerator), and the heat extractor is one or more. The excess heat of the regeneration system can be used to generate high-pressure steam through the heat extractor, and exported to other devices for energy supply. In a specific embodiment, by providing a heat extractor, the regenerator bed temperature is controlled not to exceed 750 °C, for example, not to exceed 720 °C.

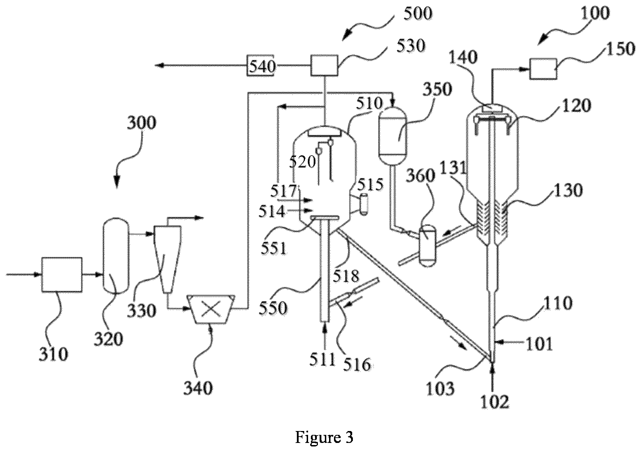

FIG. 3 shows a schematic diagram of a third preferred embodiment of the catalyst regeneration method and system of the present application, wherein the regeneration process is a two-stage regeneration method.

As shown in FIG. 3, the catalyst regeneration unit 500 includes:
a coke-burning section 550, which may be in the form of a coke-burning pipe, wherein the coke-burning section is provided with:
a catalyst to be regenerated inlet 516, which is used to transport the catalyst to be regenerated from the catalytic cracking reactor to the interior of the coking section;
a first oxygen-containing gas inlet 511, which is used to transport oxygen into the coke-burning section;
a regeneration section 510, the outlet of the coke-burning section 550 is in fluid communication with the regeneration section 510, so that the material in the coke-burning section can be transported to the regeneration section; the regeneration section is provided with:
   a second oxygen-containing gas inlet 514, which is used to transport a second oxygen to the interior of the regeneration section;
   a regenerated catalyst outlet 518, which is used to transport the regenerated catalyst in the regeneration section out of the regeneration section;
   a heat extractor 515, which is configured to extract excess heat from the regeneration section.

The outlet of the coke-burning section 550 may be provided with a fluid distribution plate 551, and may be located inside the regeneration section 510, so that the material in the coke-burning section can be transported to the regeneration section for subsequent regeneration after passing through the fluid distribution plate 551.

In a preferred embodiment, a mixing tank 360 can be provided on the to-be-regenerated pipeline, so that the biomass charcoal and optional pyrolytic carbon black particles are pre-mixed with the catalyst to be regenerated in a certain proportion in the to-be-regenerated mixing tank, and then transported to the regenerator to contact with oxygen for coke-burning regeneration.

During the regeneration operation, the biomass charcoal and optional pyrolytic carbon black in the storage tank 350 are mixed with the catalyst to be regenerated in the mixing tank 360, and then introduced into the coke-burning section 550, and contacted with the pure oxygen entering through the first oxygen-containing gas inlet 511 to perform partial coke-burning. After that, it enters the regeneration section 510 through the fluid distribution plate 551 for complete regeneration. At this time, pure oxygen is fed through the oxygen-containing gas inlet 514 to contact with the partially coke-burned catalyst, so that the catalyst and the incomplete regeneration flue gas are further regenerated and burned. After the regenerated catalyst is separated by a cyclone separator 520, it falls back into the regeneration section, is discharged through a catalyst outlet 518, and is circulated back to the catalytic cracking reactor. A portion of the discharged flue gas is recovered for energy by a flue gas energy recovery system 530, and then separated by a carbon dioxide separation system 540 to achieve carbon dioxide capture; the other portion of the flue gas is circulated back to the bottom of the regeneration section to control the oxygen content in the regeneration section.

In a specific embodiment, the gas fed through the first oxygen-containing gas inlet 511 and the second oxygen-containing gas inlet 514 is oxygen. The oxygen fed through the second oxygen-containing gas inlet 514 will be mixed with the recycled flue gas and so on from the pipeline 517 after entering the regeneration section to form an oxygen-carbon dioxide mixed gas. The amount of oxygen and/or recycled flue gas is controlled so that the oxygen concentration in the mixed gas is not higher than 28%. The coke-burning is carried out under this atmosphere to improve the coke-burning intensity; the intake gas does not contain nitrogen to reduce the energy consumed by gas preheating; and the carbon dioxide concentration of the flue gas at the outlet of the regeneration section is higher, which is convenient for the separation and capture of carbon dioxide.

In a specific embodiment, the operating conditions of the coke-burning section are: an operating temperature of 580-720 °C, an average catalyst residence time of 10.0-60.0 seconds, and a gas superficial linear velocity of 0.5-5.0 m/s.

In a specific embodiment, the operating conditions of the regeneration section are: an operating temperature of 580-750 °C, an average catalyst residence time of 1.0-7.0 minutes, and a gas superficial linear velocity of 0.4-1.0 m/s.

In a specific embodiment, the coke-burning ratio in the coke-burning section is 30-60%, and the coke-burning ratio in the regeneration section is 40-70%. The present application can use pure oxygen regeneration, and the regeneration flue gas contains only carbon dioxide and oxygen, which is convenient for separating and capturing carbon dioxide for further conversion and utilization, thereby achieving negative carbon emissions.

Due to the injection of biomass charcoal and optional pyrolytic carbon black, a large amount of heat will be generated during the regeneration process. If the temperature in the regeneration section is too high, it will adversely affect the activity of the catalyst. Therefore, the regeneration unit 500 is also equipped with a heat extractor 515 for removing excess heat from the regeneration section. The heat extractor can be an internal heat extractor (arranged inside the regeneration section) or/and an external heat extractor (arranged outside the regeneration section). The heat extractor is one or more, and the excess energy generated by the regeneration section is used to supply other devices. The excess heat of the regeneration system can be used to generate high-pressure steam through the heat extractor, and then exported to other devices for energy supply. In a specific embodiment, by providing a heat extractor, the bed temperature of the regeneration section is controlled not to exceed 750 °C, for example, not to exceed 720 °C.

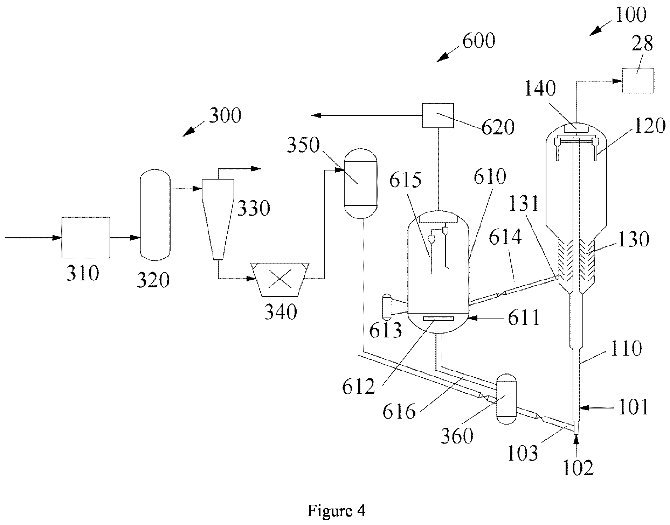

FIG. 4 shows a schematic diagram of a fourth preferred embodiment of the catalyst regeneration method and system of the present application, wherein the regeneration process is a single-stage regeneration.

During the regeneration operation, the biomass charcoal and optional pyrolysis carbon black particles in the storage tank 350 are mixed with the regenerated catalyst, and then introduced into the reactor 110. After contacting with feedstock, they enter the regeneration system 600 with the catalyst to be regenerated. The catalyst to be regenerated in the regenerator 610 contacts the oxygen-containing gas entering through the oxygen-containing gas inlet 611 for regeneration. The regenerated catalyst is discharged through the catalyst outlet 616 and circulated back to the catalytic cracking reactor. The discharged flue gas is recovered for energy through a flue gas energy recovery system 620.

Due to the injection of biomass charcoal and optional pyrolytic carbon black, some components in the feedstock oil that are difficult to convert can be adsorbed in the reactor, thereby improving the reactivity of the feedstock oil and using the difficult-to-react parts to enhance energy supply.

In addition, a large amount of heat will be generated during the regeneration process. If the temperature in the regenerator is too high, it will adversely affect the activity of the catalyst. Therefore, the regeneration unit 600 is also equipped with a heat extractor 613 for removing excess heat from the regenerator. The heat extractor can be an internal heat extractor (arranged inside the regenerator) or/and an external heat extractor (arranged outside the regenerator). The heat extractor is one or more. The excess heat of the regeneration system can be used to generate high-pressure steam through the heat extractor, and then exported to other devices for energy supply. In a specific embodiment, by providing a heat extractor, the bed temperature of the regenerator is controlled not to exceed 750 °C, for example, not to exceed 720 °C.

The catalyst suitable for the catalyst regeneration method and system of the present application can be a catalyst conventionally used in various catalytic cracking processes, and the present application has no particular restrictions. In some specific embodiments, the catalyst includes zeolite, inorganic oxide and optional clay, and each component accounts for as follows based on the total weight of the catalyst: zeolite 1% by weight-50% by weight, inorganic oxide 5% by weight-99% by weight, and clay 0% by weight-70% by weight. Wherein zeolite is the active component, selected from medium-pore zeolite and/or optional large-pore zeolite, with medium-pore zeolite accounting for 10% by weight-100% by weight of the total weight of zeolite, and large-pore zeolite accounting for 0% by weight-90% by weight of the total weight of zeolite. Medium-pore zeolite is selected from one or more of ZSM series zeolites and/or ZRP zeolite, and the above zeolite can be modified with non-metals such as phosphorus, etc., and/or transition metals such as iron, cobalt, nickel, etc. Large-pore zeolite is selected from one or more of hydrogen Y, rare earth Y, rare earth hydrogen Y, ultra-stable Y, etc.

### Example

The present application will be further described below referring to examples, but the present application is not limited in any way thereby.

The properties of the feedstock oils A and B used in the following examples and comparative examples are listed in Table 1 and Table 2, respectively.

**Table 1. Properties of feedstock oil A**

| Feed properties | Feedstock oil A |
|---|---|
| Density, kg/m³ (20 °C ) | 859.7 |
| Conradson carbon residue, weiqht% | 0.07 |
| C, weiqht% | 85.63 |
| H, weiqht% | 13.45 |
| S, weiqht% | 0.077 |
| N, weiqht% | 0.058 |
| Fe, µg/g | 2.3 |
| Na, µg/g | 0.6 |
| Ni, µg/g | 4.9 |
| V, µg/g | 0.4 |
| Group composition, weiqht% | |
| Saturated hydrocarbons | 58.1 |
| Aromatics | 26.3 |
| Colloid | 15.3 |
| Asphaltene | 0.3 |

**Table 2. Properties of feedstock oil B**

| Feed properties | Feedstock oil B |
|---|---|
| Density, kg/m³ 20 °C ) | 843.7 |
| C, weiqht% | 86.59 |
| H, weiqht% | 13.41 |
| S, µg/g | 5800 |
| N, µg/g | 62 |
| Initial boiling point, °C | 226 |
| 50% distillation temperature, °C | 287 |
| Paraffins, weiqht% | 40.5 |
| Cycloalkanes, weiqht% | 33.3 |
| Aromatics, weiqht% | 26.2 |

The preparation method of catalyst a was as follows:
(1) 20 g of NH₄Cl was dissolved in 1000 g of water, to the solution 100 g (dry basis) of crystallized product ZRP-1 molecular sieve (produced by Qilu Petrochemical Company Catalyst Plant, SiO₂/Al₂O₃ =30, rare earth content RE₂O₃ =2.0 wt%) was added, exchanged at 90 °C for 0.5 hour, filtered to obtain filter cake. 4.0 g of H₃PO₄ (concentration 85%) and 4.5 g of Fe(NO₃)₃ dissolved in 90 g of water were added, mixed with the filter cake, impregnated and dried; then calcined at 550 °C for 2 hours to obtain MFI mesoporous molecular sieve containing phosphorus and iron. The elemental analysis chemical composition of the obtained molecular sieve is: 0.1Na₂O•5.1Al₂O₃•2.4P₂O₅•1.5Fe₂O₃•3.8RE₂O₃•88.1SiO₂.
(2) 75.4 kg of halloysite (industrial product of Suzhou Clay Company, solid content 71.6 wt%) was slurried with 250 kg of decationized water, and then 54.8 kg of pseudo-boehmite (industrial product of Youdong Aluminum Plant, solid content 63 wt%) was added. The pH value was adjusted to 2-4 with hydrochloric acid, and the mixture was stirred evenly. The mixture was allowed to stand and age at 60-70 °C for 1 hour, maintaining the pH value at 2-4. The temperature was lowered to below 60 °C, and 41.5 kg of aluminum sol (product of Qilu Petrochemical Company Catalyst Plant, Al₂O₃ content 21.7 wt%) was added. The mixture was stirred for 40 minutes to obtain a mixed slurry.
(3) The MFI mesoporous molecular sieve containing phosphorus and iron(2 kg on a dry basis) prepared in step (1) and DASY zeolite (industrial product of Qilu Petrochemical Company Catalyst Plant, unit cell constant of 2.445-2.448 nm, 22.5 kg on dry basis) were added to the mixed slurry obtained in step (2), stirred evenly, spray-dried to form, washed with an ammonium dihydrogen phosphate solution (phosphorus content of 1 wt%) to remove free Na⁺, and dried to obtain a catalytic conversion catalyst a sample. Based on the total dry basis weight of catalyst a, the dry basis composition of catalyst a included: 2 wt% of MFI mesoporous molecular sieve containing phosphorus and iron, 18 wt% of DASY zeolite, 32 wt% of pseudo-boehmite and 7 wt% of aluminum sol, and a balance of kaolin. The properties of catalyst a are listed in Table 3.

**Table 3. Properties of Catalyst a**

| Catalyst brand | a |
|---|---|
| Chemical composition/weiqht% | |
| Alumina | 51 |
| Sodium oxide | 0.066 |
| Physical properties | |
| Specific surface area (m²/g) | 191 |
| Bulk density, kg/m³ | 800 |
| Wear index, weiqht%/hour | 2.8 |
| Screeninq composition, weiqht% | |
| 0-40 microns | 27.8 |
| 40-80 microns | 62 |
| >80 microns | 10.2 |

Catalyst b is TCC, and the preparation process thereof was as follows: 969g of halloysite (product of China Kaolin Company, solid content 73%) was slurried with 4300g of decationized water, and then 781g of pseudo-boehmite (product of Shandong Zibo Bauxite Factory, solid content 64%) and 144ml of hydrochloric acid (concentration 30%, specific gravity 1.56) were added and stirred evenly, the mixture was allowed to stand and age at 60 °C for 1 hour, maintaining pH at 2-4, and then cooled to room temperature, and then 5000g of high silicon-aluminum ratio mesoporous shape-selective ZSM-5 zeolite slurry containing chemical water prepared in advance was added, stirred evenly, spray dried, and free Na⁺ was washed away to obtain the catalyst. The catalyst was used after aging, with aging conditions being as follows: steam aging at 800 °C for 15 hours, properties are listed in Table 4.

**Table 4. Properties of Catalyst b**

| Catalyst | b |
|---|---|
| Chemical composition/weiqht% | |
| Al₂O₃ | 49.2 |
| Na₂O | 0.07 |
| Physical properties | |
| Specific surface area/(m²·g⁻¹) | / |
| Bulk density/(g·cm⁻³) | 0.79 |
| Wear index/(%·h⁻¹) | 1.1 |
| Screening composition/weiqht% | |
| 0-40 µm | 14.2 |
| 0-80 µm | 53.8 |
| 0-149 µm | 89.5 |

The preparation process of catalyst c was as follows:
(1) 20 g of NH₄Cl was dissolved in 1000 g of water, to the solution 100 g (dry basis) of crystallized product ZRP-1 molecular sieve (produced by Qilu Petrochemical Company Catalyst Plant, SiO₂/Al₂O₃ =30, rare earth content RE₂O₃ =2.0 wt%) was added, exchanged at 90 °C for 0.5 hour, filtered to obtain filter cake. 4.0 g of H₃PO₄ (concentration 85%) and 4.5 g of Fe(NO₃)₃ dissolved in 90 g of water were added, mixed with the filter cake, impregnated and dried; then calcined at 550 °C for 2 hours to obtain MFI mesoporous molecular sieve containing phosphorus and iron. The elemental analysis chemical composition of the obtained molecular sieve is: 0.1Na₂O•5.1Al₂O₃•2.4P₂O₅•1.5Fe₂O₃•3.8RE₂O₃•88.1SiO₂.
(2) 75.4 kg of halloysite (industrial product of Suzhou Clay Company, solid content 71.6 wt%) was slurried with 250 kg of decationized water, and then 54.8 kg of pseudo-boehmite (industrial product of Youdong Aluminum Plant, solid content 63 wt%) was added. The pH value was adjusted to 2-4 with hydrochloric acid, and the mixture was stirred evenly. The mixture was allowed to stand and age at 60-70 °C for 1 hour, maintaining the pH value at 2-4. The temperature was lowered to below 60 °C, and 41.5 kg of aluminum sol (product of Qilu Petrochemical Company Catalyst Plant, Al₂O₃ content 21.7 wt%) was added. The mixture was stirred for 40 minutes to obtain a mixed slurry.
(3) The MFI mesoporous molecular sieve containing phosphorus and iron(2 kg on a dry basis) prepared in step (1) was added to the mixed slurry obtained in step (2), stirred evenly, spray-dried to form, washed with an ammonium dihydrogen phosphate solution (phosphorus content of 1 wt%) to remove free Na⁺, and dried to obtain a catalytic conversion catalyst c sample. Based on the total dry basis weight of catalyst c, the dry basis composition of catalyst c included: 2wt% of MFI mesoporous molecular sieve containing phosphorus and iron, 36 wt% of pseudo-boehmite and 8 wt% of aluminum sol, and a balance of kaolin.

### Example 1

The device shown in Figure 1 was used for the experiment, in which the specific preparation process of biomass charcoal was as follows:
The biomass was pretreated in the pretreatment system by water washing or acid washing, and then crushing, drying and so on. The moisture content of the raw material was controlled below 25%. The pretreated biomass was pyrolyzed in the biomass charcoal generator at a pyrolysis temperature of 600 °C. The atmosphere was a nitrogen-carbon dioxide mixed gas containing 5% oxygen, and the heating rate was 5 °C/min. The obtained biomass charcoal was ground into particles with a particle size of 30-80 microns in the grinder and then stored in the storage tank for standby use.

Feedstock A was used as the reaction feedstock, and catalytic conversion catalyst a was used as the catalyst. According to the method of the present application, the catalyst to be regenerated was regenerated, wherein into the regenerator air was introduced, and the biomass charcoal with a particle size of 30-80 microns was introduced to undergo a combustion reaction with the catalyst to be regenerated, with the ratio of the circulating catalyst to be regenerated to the biomass charcoal being 137:1 (weight). The operating temperature of the regenerator was 680 °C, the average residence time of the catalyst and the biomass charcoal was 14 minutes, and the gas superficial linear velocity was 0.8 m/s. The regenerated catalyst entered the reactor and contacted with the feedstock oil for catalytic cracking reaction, and the excess energy was used to supply other devices through the heat extraction system. The regeneration conditions, reaction conditions, and carbon dioxide emissions are shown in Table 5.

### Comparative Example 1

The experiment was carried out with reference to Example 1, except that the biomass processing unit was not used, but diesel was directly injected into the regenerator as fuel oil, and the fuel oil was used as a supplementary source of energy. Air was introduced into the regenerator, the operating temperature of the regeneration reactor was 680 °C, the average catalyst residence time was 14 minutes, and the gas superficial linear velocity was 0.8m/s. The regenerated catalyst entered the reactor and contacted with the feedstock oil for catalytic cracking reaction. The excess energy was used to supply other devices through the heat extraction system. The regeneration conditions, reaction conditions, and carbon dioxide emissions are shown in Table 5.

**Table 5. Operating conditions and results of Example 1 and Comparative Example 1**

| Project | Example 1 | Comparative Example 1 |
|---|---|---|
| Hydrocarbon cracking unit | | |
| Riser Reactor | | |
| Catalyst | a | a |
| Feedstock | Feedstock oil A | Feedstock oil A |
| Reaction temperature, °C | 650 | 650 |
| Reaction time, seconds | 0.8 | 0.8 |
| Steam/feedstock oil weight ratio | 0.8 | 0.8 |
| Catalyst/feedstock oil weight ratio | 20 | 20 |
| Fluidized Bed | | |
| Reaction temperature, °C | 580 | 580 |
| Weight hourly space velocity, h⁻¹ | 10 | 10 |
| Product distribution, weight% | | |
| Dry gas | 11.91 | 11.85 |
| Liquefied gas | 42.22 | 42.31 |
| Propylene | 19.30 | 19.44 |
| Gasoline | 26.60 | 26.56 |
| Diesel | 6.69 | 6.72 |
| Oil slurry | 6.37 | 6.31 |
| Coke | 6.21 | 6.25 |
| Total | 100 | 100 |
| Regeneration unit | | |
| Temperature, °C | 680 | 680 |
| Average residence time, min | 14 | 14 |
| Supplementary heat medium | Biomass charcoal | Fuel oil |
| Supplement Amount^{†} | 7.308 g | 4.456 g |
| Carbon dioxide emission index^{‡} | | |
| gCO₂/MJ | 49.62 | 82.72 |

| | | |
|---|---|---|
| †: Based on processing 100g of feedstock. ‡: The carbon dioxide emission index refers to the amount of carbon dioxide from fossil energy emitted for every 1 MJ of energy generated by the coke-burning in the regeneration system. The calculation method refers to the "Guidelines for Accounting and Reporting Greenhouse Gas Emissions China Petrochemical Enterprises (Trial)" (hereinafter the same); the carbon dioxide produced by biomass charcoal comes from the carbon dioxide present in the atmosphere, which represents a neutral carbon emission process. | | |

From the data in Table 5, it can be seen that when the Example 1 uses biomass charcoal as supplementary source of energy, when the regeneration system produces the same amount of energy, the amount of carbon dioxide emitted is significantly reduced compared with the Comparative Example 1, which is conducive to fundamentally reducing carbon dioxide emissions.

### Example 2

The device shown in FIG. 2 was used for the experiment, wherein the structure of the catalytic cracking reactor can refer to the reactor 302 in FIG. 4 of CN 111 718 230 A.

The specific preparation process of biomass charcoal was as follows:
The biomass was pretreated by water washing or acid washing, and then crushing, drying and so on. The moisture content of the raw material was controlled below 25%. The pretreated biomass was pyrolyzed at a pyrolysis temperature of 600 °C. The atmosphere was a nitrogen-carbon dioxide mixed gas containing 5% oxygen, and the heating rate was 5 °C/min. The obtained biomass charcoal was ground into particles with a particle size of 50-150 microns and then stored in the storage tank for standby use.

The feedstock B was used as the reaction feedstock, and the catalytic conversion catalyst b was used as the catalyst. According to the method of the present application, the catalyst to be regenerated was regenerated, wherein the biomass charcoal with a particle size of 50-150 microns was introduced to the to-be-regenerated mixing tank, mixed with the catalyst to be regenerated, with the ratio of the circulating catalyst to be regenerated to the biomass charcoal being 76:1 (weight). The catalyst to be regenerated mixed with the biomass charcoal was transported to the regenerator to contact with oxygen-containing air, and a coke-burning reaction occurred. The excess energy generated by the regeneration system was used to supply energy to outside through the heat extraction system. The operating temperature of the regenerator was 680 °C, the average residence time of the catalyst and biomass charcoal in the coke-burning section was 14 minutes, and the gas superficial linear velocity was 0.8 m/s. The regenerated catalyst entered the reactor and contacted with the feedstock oil for catalytic cracking reaction. The regeneration conditions, reaction conditions, and carbon dioxide emissions are shown in Table 6.

### Comparative Example 2

The experiment was conducted with reference to Example 2, except that the biomass processing unit was not used, but diesel was directly injected into the regenerator as fuel oil, and the fuel oil was used as a supplementary source of energy. The regeneration conditions, reaction conditions, and carbon dioxide emissions are shown in Table 6.

**Table 6. Operating conditions and results of Example 2 and Comparative Example 2**

| Project | Example 2 | Comparative Example 2 |
|---|---|---|
| Hydrocarbon cracking unit | | |
| Catalyst | b | b |
| Feedstock | Feedstock oil B | Feedstock oil B |
| Reaction temperature, °C | 530 | 530 |
| Catalyst to oil ratio | 8.0 | 8.0 |
| Space velocity, h⁻¹ | 10 | 10 |
| Product distribution, weight% | | |
| Dry gas | 1.34 | 1.41 |
| Liquefied gas | 10.27 | 10.45 |
| Propylene | 4.79 | 4.71 |
| Gasoline | 14.93 | 14.98 |
| Diesel | 69.37 | 68.99 |
| Catalytic cracking distillate | 3.66 | 3.73 |
| Coke | 0.42 | 0.44 |
| Total | 100 | 100 |
| Regeneration unit | | |
| Regeneration temperature, °C | 680 | 680 |
| Average catalyst residence time, minutes | 14 | 14 |
| Supplemental energy combustion medium | Biomass charcoal | Fuel oil |
| Supplement Amount^{†} | 10.519 | 6.414 g |
| Regeneration system carbon dioxide emission index^{‡} | | |
| gCO₂/MJ | 5.19 | 78.29 |

| | | |
|---|---|---|
| †: Based on processing 100g of feedstock. ‡: The carbon dioxide emission index refers to the amount of carbon dioxide from fossil energy emitted for every 1 MJ of energy generated by the coke-burning in the regeneration system; the carbon dioxide produced by biomass charcoal comes from the carbon dioxide present in the atmosphere, which represents a neutral carbon emission process. | | |

From the data in Table 6, it can be seen that when the Example 2 uses biomass charcoal as a supplementary source of energy, when the regeneration system produces the same amount of energy, the amount of carbon dioxide emitted is significantly reduced compared with the Comparative Example 2, which is conducive to fundamentally reducing carbon dioxide emissions.

### Example 3

The device shown in FIG. 3 was used for the experiment, wherein the structure of the catalytic cracking reactor can refer to the reactor 302 in FIG. 4 of CN 111 718 230 A.

The specific preparation process of biomass charcoal was as follows:
The biomass was pretreated by water washing or acid washing, and then crushing, drying and so on. The moisture content of the raw material was controlled below 25%. The pretreated biomass was pyrolyzed at a pyrolysis temperature of 600 °C. The atmosphere was a nitrogen-carbon dioxide mixed gas containing 5% oxygen, and the heating rate was 5 °C/min. The obtained biomass charcoal was ground into particles with a particle size of 50-120 microns and then stored in the storage tank for standby use.

C₅-C₈ olefins were used as reaction feedstock (the molar ratio of C₅: C₆: C₇: C₈ olefins was 1:1:1:1), and catalytic conversion catalyst c was used as the catalyst. According to the method of the present application, the catalyst to be regenerated was regenerated, wherein pure oxygen gas was introduced into the coke-burning section, biomass charcoal with a particle size of 50-120 microns and the catalyst to be regenerated were mixed in the mixing tank, with the ratio of the catalyst to be regenerated to the biomass charcoal being 184:1 (weight), and they were introduced into the coke-burning section together for combustion reaction; then, pure oxygen gas was continuously introduced into the regenerator to continue regenerating the catalyst, and at the same time, a portion of the flue gas discharged from the cyclone separation system of the regenerator was circulated to the regenerator to dilute the pure oxygen gas introduced, and control the oxygen content to be no more than 28%. The excess energy generated by the regeneration system was used to supply energy to outside through the heat extraction system.

The temperature in the middle of the coke-burning section was 650 °C, the average residence time of the catalyst and biomass charcoal in the coke-burning section was 10 seconds, and the gas superficial linear velocity was 1.25 m/s; the temperature of the dense phase bed of the regenerator was 685 °C, the average residence time of the catalyst and biomass charcoal in the dense phase bed of the regenerator was 1.75 minutes, and the gas superficial linear velocity was 0.5 m/s. The regenerated catalyst entered the reactor and contacted with the feedstock oil for catalytic cracking reaction. The regeneration conditions, reaction conditions, and carbon dioxide emissions are shown in Table 7.

### Comparative Example 3

The experiment was carried out with reference to Example 3, except that the biomass processing unit was not used, but diesel was directly injected into the bottom of the coke-burning section as fuel oil, and the fuel oil was used as a supplementary source of energy. The temperature in the middle of the coke-burning section was 650 °C, the average residence time of the catalyst and biomass charcoal in the coke-burning section was 10 seconds, and the gas superficial linear velocity was 1.25m/s; the temperature of the dense phase bed of the regenerator was 685 °C, the average residence time of catalyst and biomass charcoal in the dense phase bed of the regenerator was 1.75 minutes, and the gas superficial linear velocity was 0.5m/s. The regenerated catalyst entered the reactor and contacted with the feedstock oil for catalytic cracking reaction. The regeneration conditions, reaction conditions, carbon dioxide emissions, and energy exported are shown in Table 7.

**Table 7. Operating conditions and results of Example 3 and Comparative Example 3**

| Project | Example 3 | Comparative Example 3 |
|---|---|---|
| Hydrocarbon crackinq unit | | |
| Catalyst | c | c |
| Feedstock | C₅-C₈ mixed olefins | C₅-C₈ mixed olefins |
| Reaction temperature, °C | 680 | 680 |
| Reaction time, seconds | 10 | 10 |
| Catalyst to oil ratio | 30 | 30 |

| Product distribution, weight% | | |
|---|---|---|
| Dry gas | 27.95 | 27.82 |
| Liquefied gas | 56.98 | 57.13 |
| Propylene | 33.97 | 33.91 |
| BTX | 2.92 | 3.01 |
| Light oil | 11.76 | 11.63 |
| Coke | 0.39 | 0.41 |
| Total | 100 | 100 |
| Ethylene + Propylene + Butene | 74.21 | 74.33 |

| Regeneration unit | | |
|---|---|---|
| Temperature in the middle of the coke-burning section, °C | 650 | 650 |
| Average residence time in the coke-burning section, seconds | 10 | 10 |
| Temperature of the dense phase bed, °C | 685 | 685 |
| Average residence time in the regenerator, minutes | 1.75 | 1.75 |
| Supplementary heat medium | Biomass charcoal | Fuel oil |
| Supplement Amount^{†} | 16.297 g | 11.130 g |

| Reqeneration system carbon dioxide emission index^{‡} | | |
|---|---|---|
| gCO₂/MJ | 2.87 | 78.03 |

| | | |
|---|---|---|
| †: Based on processing 100g of feedstock. ‡: The carbon dioxide emission index refers to the amount of carbon dioxide from fossil energy emitted for every 1 MJ of energy generated by the coke-burning in the regeneration system; the carbon dioxide produced by biomass charcoal comes from the carbon dioxide present in the atmosphere, which represents a neutral carbon emission process. | | |

From the data in Table 7, it can be seen that when light feedstock is used as cracking feedstock, the amount of coke deposition is low, which is far from meeting the energy demand of the device. When the Example 3 uses biomass charcoal as supplementary source of energy, when the regeneration system produces the same amount of energy, the amount of carbon dioxide emitted is significantly reduced compared with the Comparative Example 3, which is conducive to fundamentally reducing carbon dioxide emissions.

### Example 4

The device shown in Figure 4 was used for the experiment, in which the specific preparation process of biomass charcoal was as follows:
The biomass was pretreated in the pretreatment system by water washing or acid washing, and then crushing, drying and so on. The moisture content of the raw material was controlled below 25%. The pretreated biomass was pyrolyzed in the biomass charcoal generator at a pyrolysis temperature of 600 °C. The atmosphere was a nitrogen-carbon dioxide mixed gas containing 5% oxygen, and the heating rate was 5 °C/min. The obtained biomass charcoal was ground into particles with a particle size of 50-200 microns in the grinder and then stored in the storage tank for standby use.

Feedstock A was used as the reaction feedstock, and catalytic conversion catalyst a was used as the catalyst. According to the method of the present application, biomass charcoal with a particle size of 50-200 microns was introduced into the reactor together with the regenerated catalyst to contact with the feedstock oil, with the ratio of the circulating catalyst to be regenerated to the biomass charcoal being 137:1 (weight). The catalyst to be regenerated and the biomass charcoal after the reaction entered the regenerator. The operating temperature of the regenerator was 670 °C, the average residence time of the catalyst and the biomass charcoal was 15 minutes, and the gas superficial linear velocity was 1.5 m/s. The regenerated catalyst was mixed with the biomass and entered the reactor to contact with the feedstock oil for catalytic cracking reaction. The excess energy was used to supply other devices through the heat extraction system. The regeneration conditions, reaction conditions, and carbon dioxide emissions are shown in Table 8.

### Comparative Example 4

The experiment was carried out with reference to Example 4, except that the biomass processing unit was not used, but diesel was directly injected into the regenerator as fuel oil, and the fuel oil was used as a supplementary source of energy. Air was introduced into the regenerator, the operating temperature of the regenerator was 670 °C, the average catalyst residence time was 15 minutes, and the gas superficial linear velocity was 1.5 m/s. The regenerated catalyst entered the reactor and contacted with the feedstock oil for catalytic cracking reaction. The excess energy was used to supply other devices through the heat extraction system. The regeneration conditions, reaction conditions, and carbon dioxide emissions are shown in Table 8.

**Table 8. Operating conditions and results of Example 4 and Comparative Example 4**

| Project | Example 4 | Comparative Example 4 |
|---|---|---|
| Hydrocarbon cracking unit | | |
| Riser Reactor | | |
| Catalyst | a | a |
| Feedstock | Feedstock oil A | Feedstock oil A |
| Reaction temperature, °C | 650 | 650 |
| Reaction time, seconds | 0.8 | 0.8 |
| Steam/feedstock oil weight ratio | 0.8 | 0.8 |
| Catalyst/feedstock weight ratio | 20 | 20 |
| Fluidized bed | | |
| Reaction temperature, °C | 580 | 580 |
| Weight hourly space velocity, h⁻¹ | 10 | 10 |

| Product distribution, weight% | | |
|---|---|---|
| Dry gas | 12.18 | 11.70 |
| Liquefied gas | 44.05 | 42.79 |
| Propylene | 21.06 | 19.51 |
| Gasoline | 26.68 | 26.32 |
| Diesel | 6.21 | 6.55 |
| Oil slurry | 4.39 | 6.35 |
| Coke | 6.49 | 6.29 |
| Total | 100 | 100 |

| Regeneration unit | | |
|---|---|---|
| Temperature, °C | 670 | 670 |
| Average residence time, min | 15 | 15 |
| Supplementary heat medium | Biomass charcoal | Fuel oil |
| Supplement Amount^{†} | 6.865 g | 4.394 g |

| Carbon dioxide emission index^{‡} | | |
|---|---|---|
| gCO₂/MJ | 51.86 | 82.90 |

| | | |
|---|---|---|
| †: Based on processing 100g of feedstock. ‡: The carbon dioxide emission index refers to the amount of carbon dioxide from fossil energy emitted for every 1 MJ of energy generated by the coke-burning in the regeneration system; the carbon dioxide produced by biomass charcoal comes from the carbon dioxide present in the atmosphere, which represents a neutral carbon emission process. | | |

From the data in Table 8, it can be seen that when the Example 4 uses biomass charcoal as a supplementary source of energy, when the regeneration system produces the same amount of energy, the amount of carbon dioxide emitted is significantly reduced compared with the Comparative Example 4, which is conducive to fundamentally reducing carbon dioxide emissions. At the same time, the yields of liquefied gas and propylene in the products are increased, and the yield of slurry oil is reduced, indicating that the reactivity of the feedstock is improved.

The preferred embodiments of the present application are described in details above; however, the present application is not limited to the specific details in the above embodiments. Within the technical concept of the present application, a variety of simple modifications can be made to the technical solution of the present application, and these simple modifications all fall within the protection scope of the present application.

It should also be noted that the various specific technical features described in the above specific embodiments can be combined in any suitable manner without contradiction. In order to avoid unnecessary repetition, this application does not further describe various possible combinations.

in addition, the various embodiments of the present application may be arbitrarily combined, as long as they do not violate the concept of the present application, and they should also be regarded as the contents disclosed in the present application.

## Claims

1. A catalyst regeneration method suitable for a fluidized catalytic cracking unit comprising a catalytic cracking reactor and a catalyst regenerator, wherein the regeneration method comprises the following steps:
1) providing a biomass-derived biomass charcoal;
2) feeding the biomass charcoal and the catalyst to be regenerated from the catalytic cracking reactor into the catalyst regenerator together or separately;
3) introducing an oxygen-containing gas into the catalyst regenerator, wherein the oxygen content of the oxygen-containing gas is 14-28% by volume, preferably, the oxygen-containing gas is selected from air and oxygen diluted with recycled flue gas; and
4) contacting the catalyst to be regenerated with the biomass charcoal and oxygen-containing gas in the catalyst regenerator for coke-burning regeneration;
preferably, the operating temperature of the catalyst regenerator is in the range of 550-750 °C, and the average catalyst residence time is 1.0-15.0 minutes.

2. The method according to claim 1, wherein the particle size of the biomass charcoal is 30-1000 microns, and the weight ratio of the catalyst to be generated to the biomass charcoal is 30-300:1.

3. The method according to claim 1 or 2, wherein in step 2), the biomass charcoal is pre-mixed with the catalyst to be regenerated from the catalytic cracking reactor and then fed together to the catalyst regenerator;
preferably, the mixing is carried out in a mixing tank, and the mixing tank is provided on a to-be-regenerated inclined pipe for transporting the catalyst to be regenerated from the catalytic cracking reactor to the catalyst regenerator.

4. The method according to claim 1 or 2, wherein in step 2), the biomass charcoal is introduced into the catalytic cracking reactor and then fed to the catalyst regenerator together with the catalyst to be regenerated.

5. The method according to any one of claims 1 to 4, wherein the catalyst regenerator is a single-stage regenerator, and the operating conditions of the single-stage regenerator include: an operating temperature of 600-750 °C, an average catalyst residence time of 2.0-15.0 minutes, and a gas superficial linear velocity of 0.7-2.0 m/s.

6. The method according to any one of claims 1 to 4, wherein the catalyst regenerator is a two-stage regenerator comprising a coke-burning section and a regeneration section that are in fluid communication, and in step 2), the biomass charcoal and the catalyst to be regenerated are fed into the coke-burning section together or separately, and in step 3), the oxygen-containing gas is introduced into the bottom of the coke-burning section and the regeneration section respectively,
preferably, the operating conditions of the coke-burning section include: an operating temperature of 580-720 °C, an average catalyst residence time of 1.0-60.0 seconds, preferably 5.0-50.0 seconds, and a gas superficial linear velocity of 0.5-5.0 m/s, preferably 1.0-3.0 m/s; and
the operating conditions of the regeneration section include: an operating temperature of 580-750 °C, an average catalyst residence time of 1.0-7.0 minutes, preferably 1.0-5.0 minutes, and a gas superficial linear velocity of 0.4-1.0 m/s, preferably 0.5-0.8 m/s.

7. The method according to claim 6, wherein the coke-burning ratio in the coke-burning section is 30-60%, and the coke-burning ratio in the regeneration section is 40-70%.

8. The method according to any one of claims 1 to 7, wherein in step 1), pyrolytic carbon black obtained from other sources, such as pyrolytic treatment of waste tires, is further provided, and in step 2), the pyrolytic carbon black and the biomass charcoal are fed into the catalyst regenerator together or separately.

9. The method according to any one of claims 1 to 8, wherein the step 1) further comprises pyrolyzing the biomass and optionally waste tires under the following conditions to obtain the biomass charcoal and optionally pyrolytic carbon black:
a pyrolysis temperature of 400-1000 °C, a heating rate of 0.01-200 °C/s, a pyrolysis environment including vacuum, nitrogen atmosphere, carbon dioxide atmosphere and an inert gas diluted oxygen atmosphere.

10. The method according to claim 9, wherein the biomass and optionally the waste tires are pretreated before the pyrolysis treatment, wherein the pretreatment is selected from one or more of grinding, water washing, acid washing and drying to remove impurities such as metal elements, etc., in the biomass.

11. A catalyst regeneration system suitable for a fluidized catalytic cracking unit, comprising a biomass processing unit and a catalyst regeneration unit, wherein:
the biomass processing unit is used to process the biomass and optionally the waste tires, such as pyrolysis treatment to obtain biomass charcoal and optional pyrolytic carbon black, and comprises a biomass charcoal generator, a grinder and a storage tank that are connected in sequence, wherein the biomass charcoal generator comprises a biomass feedstock inlet and a product outlet, the product outlet is connected to the inlet of the grinder, and the outlet of the grinder is connected to the inlet of the storage tank;
the catalyst regeneration unit is used to regenerate the catalyst to be regenerated from the catalytic cracking reactor, and comprises a catalyst regenerator having at least one solid material inlet, an oxygen-containing gas inlet, a regeneration flue gas outlet and a regenerated catalyst outlet, and
the outlet of the storage tank is connected to the solid material inlet of the catalyst regenerator.

12. The catalyst regeneration system according to claim 11, wherein the biomass processing unit further comprises a preprocessor, wherein the preprocessor is used to pretreat the biomass, and the pretreatment is selected from one or more of grinding, water washing, acid washing and drying.

13. The regeneration system according to claim 11 or 12, further comprising a to-be-regenerated inclined pipe connecting the catalytic cracking reactor with the solid material inlet of the catalyst regenerator, wherein:
the outlet of the storage tank is connected to the catalytic cracking reactor, so that the solid particles from the storage tank enter the catalytic cracking reactor, and then are transported to the solid material inlet of the catalyst regenerator through the to-be-regenerated inclined pipe together with the catalyst to be regenerated; or
a mixing tank is provided on the to-be-regenerated inclined pipe, and the outlet of the storage tank is connected to the mixing tank, so that the solid particles from the storage tank are mixed with the catalyst to be regenerated in the mixing tank and then transported to the solid material inlet of the catalyst regenerator through the to-be-regenerated inclined pipe.

14. The catalyst regeneration system according to any one of claims 11 to 13, wherein the catalyst regenerator comprises a coke-burning section and a regeneration section, wherein the outlet of the coke-burning section is in fluid communication with the regeneration section, so that the material in the coke-burning section can be transported to the regeneration section,
wherein the coke-burning section is provided with:
at least one solid material inlet, which is provided at the lower part of the coke-burning section and is used to transport the biomass charcoal and the catalyst to be regenerated from the catalytic cracking reactor into the interior of the coke-burning section; and
a first oxygen-containing gas inlet, which is provided at the bottom of the coke-burning section and is used to transport the oxygen-containing gas into the interior of the coke-burning section;
wherein the regeneration section is provided with:
a second oxygen-containing gas inlet, which is provided at the bottom of the regeneration section and is used to transport the oxygen-containing gas into the interior of the regeneration section;
the regenerated catalyst outlet, which is used to transport the regenerated catalyst in the regenerator out of the regenerator;
the regeneration flue gas outlet, which is provided at the top of the regeneration section and is used to discharge the regeneration flue gas in the regeneration section; and
optionally a recycled flue gas inlet for recirculating a portion of the flue gas discharged from the regeneration section back to the regeneration section,
optionally, the regeneration section is further provided with a heat extractor for controlling the temperature of the regenerator and transferring excess heat to the outside of the regenerator.
